Europäisches Patentamt

European Patent Office

Office européen des brevets

(11) Publication number: **0 232 709 B1**

# EUROPEAN PATENT SPECIFICATION

(45) Date of publication of patent specification: **21.08.91**  (51) Int. Cl.⁵: **B42D 15/10**

(21) Application number: **87100117.8**

(22) Date of filing: **07.01.87**

(54) Method of making identification card.

(30) Priority: **08.01.86 US 817242**

(43) Date of publication of application:
**19.08.87 Bulletin 87/34**

(45) Publication of the grant of the patent:
**21.08.91 Bulletin 91/34**

(84) Designated Contracting States:
**DE FR GB NL SE**

(56) References cited:
**EP-A- 0 113 228**
**WO-A-82/04149**
**FR-A- 2 266 245**
**FR-A- 2 449 930**

(73) Proprietor: **Lasercard Company L.P.**
**4-16 High Street**
**Acton Massachusetts 01720(US)**

(72) Inventor: **Wilfert,Ronald A.**
**154 Heald Street**
**Pepperell,Massachusetts 01720(US)**

(74) Representative: **Strasse, Joachim, Dipl.-Ing. et al**
**Eisenführ, Speiser & Strasse Zweibrücken-strasse 17**
**W-8000 München 2(DE)**

Rank Xerox (UK) Business Services

## Description

The invention relates to a method of fabricating an identification card by scanning a portrait of a person or other object by a video camera or the like to obtain a first set of digital data for an identification image, providing a second set of digital data representing additional alphanumeric information, processing and storing said first and second sets of digital data for display and for printing on a sheet of paper, and encapsulating said sheet of paper between thermoplastic layers.

According to the prior art identification cards provide a quick and convenient means of providing personal identification. Such cards are widely used in connection with business transactions, control of access to restricted information or areas, and for various governmental identification functions. Many such cards carry a magnetized stripe encoded with the identification information or may have one or more photographs usually requiring the use of photographic film with its attendant processing costs. Such cards can represent a major expense in high volume applications such as national identity cards.

U.S. Patent 3,640,009 to Komiyama describes an identification card in which a protective plastic layer is provided with a recess in which a paper insert carrying identification information is secured by adhesive. The edge portion of this plastic layer is laminated around its edges to another protective plastic sheet. The plastic used forms a filter that is transparent to either ultraviolet or infrared wavelengths which prevent the photographic image from being examined with ambient light. The construction described in Komiyama is expensive and is not suitable for high volume applications. An additional drawback is the requirement for spezialized equipment to read the identification card.

U.S. Patent 3,245,697 to Nugent describes an identification card carrying a photograph and other indicia which makes use of a photographic film as one of two plastic protective layers which enclose an information layer having opaque and transparent areas in the form of an intricate scroll. The card is read by ultraviolet light that is transmitted through the card. This card has all of the disadvantages of the one described in Komiyama.

U.S. Patent 4,119,361, to Greenaway describes an identification card in which an internal information layer carries holograms, diffraction sreens or miniature Fresnel prisms. That patent also discloses the use of a cellular structure for the information layer that prevents destruction of the information when the card layers are secured by chemical adhesives.

All of these identifications cards suffer from the high cost of production and their lack of suitability for high-volume low-cost application requiring maximum security.

From WO 82/04149 it is already known to scan a portrait of a person by a TV camera, and to digitise the obtained video data. These digital video data as well as additional alphanumeric data are displayed on a TV monitor. The digital video data are printed on a sheet of paper by a facsimile printer using ink or toner, whereas the alphanumeric data are printed on the sheet of paper by a separate conventional alphanumeric line printer, for instance a daisy-wheel printer, in a separate step. The sheet of paper, bearing the graphic information as well as the alphanumeric information, is then encapsulated between thermoplastic layers of transparent film, which bonds firmly to the ink or toner of the graphic image, so that it cannot be physically separated as was the case with photographic techniques used sensitised photographic material.

In FR-A-22 66 245 the possibility of forgoing conventional, laminated identification cards is illustrated, and it is suggested to provide areas between the data-bearing paper and the thermoplastic cover sheets, in which the cover purposely does not adhere to the surface of the paper, so that when splitting the identity card, the data is partially destroyed. The bonding of the cover sheets to the paper sheet is made by using an adhesive material, and the areas not to adhere are treated by a silicone-based parting material.

It is an object of the invention to provide a method of fabricating a forgoing-proof identification card at low costs and having the flexibility to readily combine graphic data with alphanumeric and other data.

The method, as defined above, according to the invention is characterized by
- processing said first and second sets of data to produce a combined set of data,
- printing a visual pattern controlled by said combined set of data in one single step on a sheet of paper, and thereafter
- laminating said paper between two sheets of thermoplastic material, at least one of which is transparent to visible light, by means of sufficient heat and pressure to cause said thermoplastic material to penetrate interstices between the fibers of said paper.

The present invention can be used in connection with high volume card production in which a photograph from a video camera is converted to digital data and processed to permit reproduction of a highquality portrait on a video display screen. Other images, such as signatures and finger prints, can be treated in a similar manner using either a video camera or a CCD (charge-coupled device). After processing, the video information is displayed on the screen where it is combined with variable data typed in from a keybord, or provided from another source. The video images can be cropped, reduced or enlarged, and moved to any desired location on the video screen. The digital data from the terminal is fed into a laser printer that prints the portrait and any desired alphanumeric information on a paper card. This card is then laminated, under heat and pressure, between two sheets of transparent thermoplastic material, at a temperature and pressure sufficient to cause the plastic material to penetrate the interstices between the fibers of the paper card and form a unitary structure that cannot be deliminated without destruction of the identifying data.

A brief description of preferred embodiment as follows:

The portrait of a person or other object to be reproduced on a high-security identification card is recorded by a conventional video camera and the corresponding signal fed into an image processor. The image processor modifies the information from the camera in such manner as to permit the presentation of a high quality reproduction on the screen of a video display terminal. The portrait is represented by digital information in a manner representing a halftone image, but may be formed by various sizes and shapes of image particles. However, it is known that a laser printer is capable of producing a range of gray-scale dots to permit simulation of a half tone image. Software for providing such digitized images are already known and are produced by a number of companies including Interleaf Inc. of Cambridge, Massachusetts.

Alternatively, the image may be produced by a scanning CCD and may include a personal signature, finger prints or other information. This information is processed also by the image processor and fed into the display terminal. The display terminal is provided with known controls to crop, reduce or enlarge the visual images and place them in any desired position on the screen.

Additional data to be included on the card is typed into the display terminal from a conventional Keyboard. When the information is displayed in the desired format on the screen, the signal from the terminal is fed into a laser printer which reproduces the image on a paper sheet. The printer may be similar to those manufactured by Cannon, Inc. and preferably is capable of producing sheets large enough to hold a number of individual bodies of card information. For example, a single sheet of paper can be printed on both sides, in a single pass, with the information for as many as thirty identification cards. Line art can be printed with a resolution of 60 pixels per cm (150 per inch). Photographic information is printed with a resolution of 40 pixels per cm (100 per inch) with 64 levels of gray. The digital information is also fed into a permanent memory which permits the information to be recalled at a later time for modification or producing an additional identical card.

The printed sheet of paper is fed into a laminator where the paper sheet is laminated under heat and pressure between two sheets and of transparent thermoplastic material, such as polyester. The pressure and heat are adjusted to melt the plastic sufficiently to cause it to penetrate the fibers of the paper. The lamination, including a number of individual identification cards, is passed through a cooling chamber into a card puncher. The puncher punches the individual cards from the larger sheet.

The finished card may include a portrait, a personal signature and printed data. As mentioned above, the card may be printed on both sides to provide additional information. If the card is printed on one side only, then only one sheet of the plastic laminate need be transparent.

The high cost of instant-type photographic film and the cumbersome photographic processes are eliminated by the direct imaging process described here. The resulting card is economical to produce, since it eliminates all requirements for film, yet provides a highly secure identification card that is substantially impossible to alter. Any attempt to delaminate the card results in destruction of the information carried by the card. The system is flexible and any card in the system can be readily produced again, either in modified or identical form, by recalling from the memory the digital information representing the card.

Additional security can be provided by using bank note paper with preprinted fine line coded patterns, such as that sold under the trademark Scrambled Indicia, by Graphic Security Systems Corporation, 505 Northern Boulevard, Great Neck, New York. Further security can be provided by the use of ultraviolet fluorescent or water soluable inks, water marks, or holograms.

## Claims

1. The method of fabricating an identification card by scanning a portrait of a person or other object by a video camera or the like to obtain a first set of digital data for an identification image, providing a second set of digital data representing additional alphanumeric information, processing and storing said first and second sets of digital data for display and for printing on a sheet of paper, and encapsulating said sheet of paper between thermoplastic layers,
   characterized by
      - processing said first and second sets of data to produce a combined set of data,

- printing a visual pattern controlled by said combined set of data in one single step on a sheet of paper, and thereafter
- laminating said paper between two sheets of thermoplastic material, at least one of which is transparent to visible light, by means of sufficient heat and pressure to cause said thermoplastic material to penetrate interstices between the fibers of said paper.

2. The method as claimed in claim 1 wherein said plastic is formed of polyester.

3. The method as claimed in claim 1 or 2 wherein both sheets of said plastic material are transparent to visible light.

4. The method as claimed in claim 1 wherein said step of printing said information on a sheet of paper includes the step of printing by means of a laser printer.

5. The method as claimed in claim 1 including the additional steps of
   - presenting both of said sets of data on a video terminal screen,
   - rearranging the format of said data, and
   - recording both of said sets of data in a permanent memory.

6. The method as claimed in any preceding claim wherein said identification information is a personal photograph.

7. The method as claimed in any preceding claim wherein said second set of data comprises alphanumeric data and/or additional graphic data like fingerprints, signatures.

## Revendications

1. Procédé de fabrication d'une carte d'identification en balayant un portrait d'une personne ou autre objet au moyen d'une caméra vidéo ou équivalent afin d'obtenir un premier ensemble de données numériques pour une image d'identification, en prévoyant un deuxième ensemble de données numériques représentant une information alphanumérique additionnelle, en traitant et en mémorisant les dits premier et deuxième ensembles de données numériques pour affichage et pour impression sur une feuille de papier, et en encapsulant la dite feuille de papier entre des couches de matière thermoplastique, caractérisé par
   - le traitement des dits premier et deuxième ensembles de données numériques afin de produire un ensemble combiné de données,
   - l'impression d'un motif visuel commandé par le dit ensemble combiné de données en une seule étape sur une feuille de papier, et à la suite de cela
   - la stratification du dit papier entre deux feuilles de matière thermoplastique, dont l'une au moins est transparente à la lumière visible, au moyen d'une chaleur et d'une pression suffisantes pour amener la dite matière thermoplastique à pénétrer dans des interstices entre les fibres du dit papier.

2. Procédé selon la revendication 1, dans lequel la dite matière plastique est constituée par du polyester.

3. Procédé selon la revendication 1 ou 2, dans lequel les deux feuilles de la dite matière plastique sont transparentes à la lumière visible.

4. Procédé selon la revendication 1, dans lequel la dite étape d'impression de la dite information sur une feuille de papier comprend l'étape d'impression au moyen d'une imprimante laser.

5. Procédé selon la revendication 1, comportant les étapes additionnelles de
   - présentation des deux ensembles de données sur un écran de terminal vidéo,
   - réaménagement du format des dites données, et
   - enregistrement des deux ensembles de données dans une mémoire permanente.

6. Procédé selon l'une quelconque des revendications précédentes, dans lequel la dite information d'identification est une photographie personnelle.

7. Procédé selon l'une quelconque des revendications précédentes, dans lequel le dit deuxième ensemble de données comporte des données alphanumériques et/ou des données graphiques additionnelles telles que des empreintes digitales, des signatures.

## Patentansprüche

1. Verfahren zur Herstellung einer Identifikationskarte durch Abtasten eines Portraits einer Person oder eines anderen Objektes durch eine Videokamera o.dgl. zum Erhalt eines ersten digitalen Datensatzes für ein Identifikationsbild, durch Bereit-stellen eines zweiten digitalen Datensatzes zur Darstellung zusätzlicher alphanumerischer Informationen,

durch Verarbeiten und Speichern der ersten und zweiten digitalen Datensätze zwecks Anzeige und zum Drucken auf ein Papierblatt, und

durch Einsiegeln des Papierblattes zwischen thermoplastischen Schichten, gekennzeichnet durch folgende Schritte:

- Verarbeiten der ersten und zweiten Datensätze zwecks Erzeugung eines kombinierten Datensatzes,

- Ausdrucken eines visuellen Musters in einem einzigen Schritt auf ein Papierblatt unter Steuerung durch den kombinierten Datensatz, und danach

- Einlaminieren des Papierblattes zwischen zwei Folien aus thermoplastischem Material, von denen mindestens eine für sichtbares Licht genügend transparent ist, durch Einwirken genügender Hitze und genügendem Druck, damit das thermoplastische Material in die Zwischenräume zwischen den Fasern des Papierblattes eindringt.

2. Verfahren nach Anspruch 1,
dadurch gekennzeichnet, daß der Kunststoff Polyester ist.

3. Verfahren nach Anspruch 1 oder 2,
dadurch gekennzeichnet, daß beide Kunststoffolien für sichtbares Licht transparent sind.

4. Verfahren nach Anspruch 1,
dadurch gekennzeichnet, daß das Drucken der Informationen auf das Papierblatt durch einen Laserdrucker erfolgt.

5. Verfahren nach Anspruch 1,
gekennzeichnet durch die zusätzlichen Schritte:

- Anzeigen der beiden Datensätze auf einem Videoschirm,

- Umordnen des Formates der Daten, und

- Aufzeichnen der beiden Datensätze in einem permanenten Speicher.

6. Verfahren nach einem der vorstehenden Ansprüche, dadurch gekennzeichnet, daß die Identifikationsinformation eine persönliche Photografie ist.

7. Verfahren nach einem der vorstehenden Ansprüche, dadurch gekennzeichnet, daß der zweite Datensatz alphanumerische Daten und/oder zusätzliche graphische Daten wie

Fingerabdrücke, Unterschriften enthält.